# EUROPEAN PATENT APPLICATION

(11) **EP 4 815 170 A1**
(43) Date of publication of application: **30.09.2026**
(21) Application number: 26162830.9
(22) Date of filing: 06.03.2026
(51) Int. Cl.: H01M 50/507, H01M 10/42, H01M 50/249

(54) **ONBOARD DEVICE**

(30) Priority: 26.03.2025 JP 2025052554
(71) Applicant: Toyota Jidosha Kabushiki Kaisha, Toyota-shi, Aichi-ken 471-8571 (JP)
(72) Inventor: TANAKA, Hiromasa, Toyota-shi, 471-8571 (JP); SHIMIZU, Yuki, Toyota-shi, 471-8571 (JP); YOKOYAMA, Hiroyuki, Toyota-shi, 471-8571 (JP); INUKAI, Satoshi, Toyota-shi, 471-8571 (JP)
(74) Representative: TBK

(57) **Abstract**

An onboard device 13 includes a first equipment 30, and a first bus bar 94B and a second bus bar 72B connected to the first equipment 30. A part where the first equipment 30 and the first bus bar 94B have been connected configures an electrically active section 98A. The second bus bar 72B includes a cover portion 78B21 having insulation properties, and the cover portion 78B21 of the second bus bar 72B covers the electrically active section 98A in a state in which the second bus bar 72B has been connected to the first equipment 30.

## Description

### BACKGROUND

### Technical Field

The present disclosure relates to an onboard device.

### Background Art

Japanese Patent Application Laid-Open (JP-A) No. 2023-046719 discloses a battery pack (onboard device) including electrical equipment, and a bus bar connected to the electrical equipment.

### SUMMARY OF INVENTION

### Technical Problem

An object of the present disclosure is to implement a compact structure in an onboard device that includes a first equipment, and a first bus bar and a second bus bar connected to the first equipment.

### Solution to Problem

An onboard device according to a first aspect includes a first equipment, a first bus bar connected to the first equipment, and a second bus bar connected to the first equipment, wherein a part where the first equipment and the first bus bar have been connected configures an electrically active section, the second bus bar includes a cover portion having insulation properties, and the cover portion of the second bus bar covers the electrically active section in a state in which the second bus bar has been connected to the first equipment.

In the present aspect, the onboard device includes the first equipment, the first bus bar connected to the first equipment, and the second bus bar connected to the first equipment. The part where the first equipment and the first bus bar have been connected configures the electrically active section.

A state in which the electrically active section remains exposed is not desirable. Although consideration might be given to providing a cover or the like to cover the electrically active section, this would lead to a more bulky structure in such cases.

Thus in the present aspect, the second bus bar includes the cover portion having insulation properties, and the cover portion of the second bus bar covers the electrically active section in a state in which the second bus bar has been connected to the first equipment.

This means that the electrically active section is able to be covered by the second bus bar, enabling a more compact structure to be realized than in an embodiment in which a separate member is provided to cover the electrically active section.

Note that the electrically active section is a conductive part with the objective of conducting during normal use.

Note although in the exemplary embodiments described below the onboard device is a battery pack, the present aspect is not limited thereto.

Note that although in the exemplary embodiments described below the first equipment is a junction block, the present aspect is not limited thereto.

Note that although in the exemplary embodiments described below the wider-width portion of the bus bar cover provided to the second bus bar functions as a cover portion, the present aspect is not limited thereto. For example, a bus bar cover provided to the second bus bar may lack the wider-width portion.

An onboard device according to a second aspect is the first aspect, wherein the second bus bar configures at least part of wiring connecting a battery and the first equipment together, and the electrically active section is in a non-conducting state in a state in which the second bus bar is not connected to the first equipment.

In the present aspect, the second bus bar configures at least part of the wiring connecting the battery and the first equipment together, and the electrically active section is in a non-conducting state in a state in which the second bus bar is not connected to the first equipment.

This thereby enables the safety to be improved.

An onboard device according to a third aspect is the first or second aspect, wherein the second bus bar includes a bus bar cover, the bus bar cover includes a wider-width portion formed with a locally greater width dimension, and the wider-width portion functions as the cover portion.

In the present aspect the second bus bar includes the bus bar cover. The bus bar cover includes the wider-width portion formed with a locally greater width dimension. The wider-width portion functions as the cover portion.

This means that the electrically active section is able to be covered appropriately even in cases in which the width dimension at general portions of the bus bar cover is insufficient to cover the electrically active section.

An onboard device according to a fourth aspect is the third aspect, wherein the bus bar cover includes a one-side cover covering a bus bar main body of the second bus bar from a plate thickness direction one-side, and an other-side cover covering the bus bar main body of the second bus bar from a plate thickness direction other-side, and the wider-width portion is formed as a separate body to the one-side cover and the other-side cover.

In the present aspect, the bus bar cover includes the one-side cover covering the bus bar main body of the second bus bar from the plate thickness direction one-side, and the other-side cover covering the bus bar main body of the second bus bar from the plate thickness direction other-side.

The wider-width portion is formed as a separate body to the one-side cover and the other-side cover.

Design changes to the width dimension of the wider-width portion are accordingly facilitated.

An onboard device according to a fifth aspect is the third aspect, wherein the bus bar cover includes a one-side cover covering a bus bar main body of the second bus bar from a plate thickness direction one-side, and an other-side cover covering the bus bar main body of the second bus bar from a plate thickness direction other-side, and the wider-width portion is formed integrated to the one-side cover or the other-side cover.

In the present aspect, the wider-width portion is integrally formed to one or other out of the one-side cover or the other-side cover.

This thereby enables an increase in the number of components to be suppressed.

An onboard device according to a sixth aspect is any one of the first to the fifth aspects, wherein the second bus bar is connected to the first equipment from above, and the cover portion covers the electrically active section from above.

In the present aspect, the second bus bar is connected to the first equipment from above. The cover portion covers the electrically active section from above.

A task of connecting the second bus bar to the second equipment is accordingly facilitated.

An onboard device according to a seventh aspect is the sixth aspect, wherein the second bus bar is connected in a vicinity of an outer edge of the first equipment in plan view, the second bus bar includes a first extension portion extending in a direction along the outer edge of the first equipment in plan view, and the cover portion is provided to the first extension portion.

In the present aspect, the second bus bar is connected in the vicinity of the outer edge of the first equipment in plan view, the second bus bar includes the first extension portion extending in a direction along the outer edge of the first equipment in plan view. The first extension portion overlaps with the first equipment in plan view.

This thereby enables a space overlapping with the first equipment in plan view to be utilized efficiently.

In the present aspect the cover portion is provided to the first extension portion.

This means that the first extension portion overlapping with the first equipment in plan view can be utilized efficiently to enable realization of protection of the electrically active section.

An onboard device according to an eighth aspect is the sixth or seventh aspect, wherein the onboard device includes a second equipment, and the second equipment is arranged further upward than the cover portion such that at least part of the second equipment overlaps with the electrically active section and the cover portion in plan view.

In the present aspect the onboard device includes the second equipment. The second equipment is arranged further upward than the cover portion such that at least part of the second equipment overlaps with the electrically active section and the cover portion in plan view.

A space directly above the electrically active section and the cover portion can be utilized for placement of the second equipment in an easy-to-implement compact structure, resulting in an efficient arrangement overall.

Note that although in the exemplary embodiments described below the second equipment is a battery ECU serving as an information processing device, the present aspect is not limited thereto.

As described above, the present disclosure enables a compact structure to be realized in an onboard device provided with a first equipment, and a first bus bar and a second bus bar connected to the first equipment.

### BRIEF DESCRIPTION OF DRAWINGS

Exemplary embodiments of the present disclosure will be described in detail based on the following figures, wherein:
Fig. 1 is a schematic side view of a vehicle installed with a battery pack;
Fig. 2 is a schematic cross-section illustrating an enlargement of a vicinity of a rear end portion of a battery pack;
Fig. 3 is a schematic cross-section illustrating a connection procedure for upper/lower connection bus bars;
Fig. 4 is a schematic cross-section illustrating a state in which connection by upper/lower connection bus bars is complete;
Fig. 5 is a plan view illustrating a battery case and a battery;
Fig. 6 is a plan view illustrating a battery pack and external battery equipment;
Fig. 7 is a schematic perspective view of a junction block serving as a first equipment;
Fig. 8 is a schematic plan view illustrating a junction block serving as a first equipment, together with a first bus bar and a second bus bar;
Fig. 9 is a schematic plan view illustrating a state in which a first bus bar has been connected to a junction block serving as a first equipment;
Fig. 10 is a schematic plan view illustrating a state in which a first bus bar and a second bus bar have been connected to a junction block serving as a first equipment;
Fig. 11 is a cross-section taken along line 11-11 of Fig. 10; and
Fig. 12 is a cross-section, corresponding to Fig. 11, illustrating a modified example.

### DESCRIPTION OF EMBODIMENTS

Description follows regarding preferable exemplary embodiments of the present disclosure.

Note that as appropriate in the drawings, arrow FR indicates a vehicle forward direction, arrow UP indicates a vehicle upward direction, and arrow LH indicates a vehicle width direction left side. Moreover, when front and rear, up and down, and left and right directions are employed in the following description, unless explicitly stated otherwise, these respectively indicate front and rear in the vehicle front-rear direction, up and down in the vehicle height direction, and left and right in the vehicle width direction.

A vehicle 10 includes front seats 11 and rear seats 12 provided in a vehicle cabin. The front seats 11 are configured by a driver's seat and a front passenger seat. The rear seats 12 are, for example, a bench seat.

### Battery Pack 13

The vehicle 10 includes a battery pack 13 arranged below the vehicle cabin. The battery pack 13 corresponds to an "onboard device" of the present disclosure. The battery pack 13 is sometimes called onboard device 13.

The battery pack 13 includes a battery 20, internal battery equipment 30 electrically connected to the battery 20 and plural information processing devices 60, and housing cases 40, 50 respectively housing these.

The housing cases 40, 50 include the battery case 40 housing the battery 20, and the equipment case 50 housing the internal battery equipment 30 and the plural information processing devices 60A, 60B.

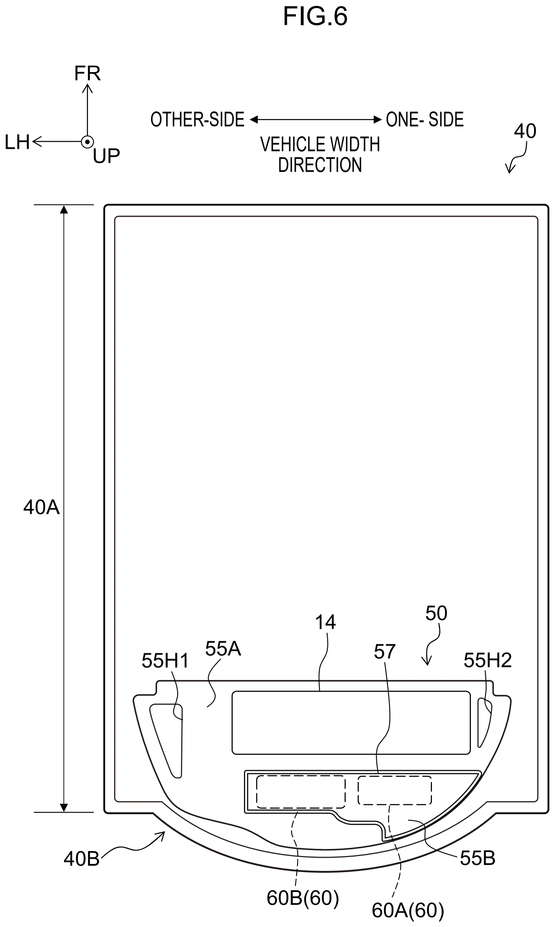

The equipment case 50 is arranged above the battery case 40 such that at least part of the equipment case 50 overlaps with at least part of the battery case 40 in plan view. Specifically, as illustrated in Fig. 6, the equipment case 50 is arranged above the battery case 40 such that the entire equipment case 50 overlaps with part of the battery case 40 in plan view.

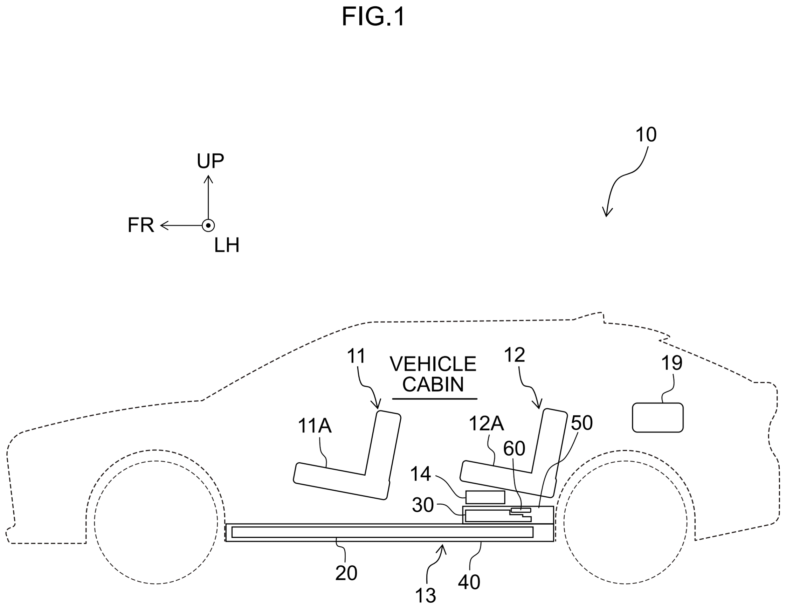

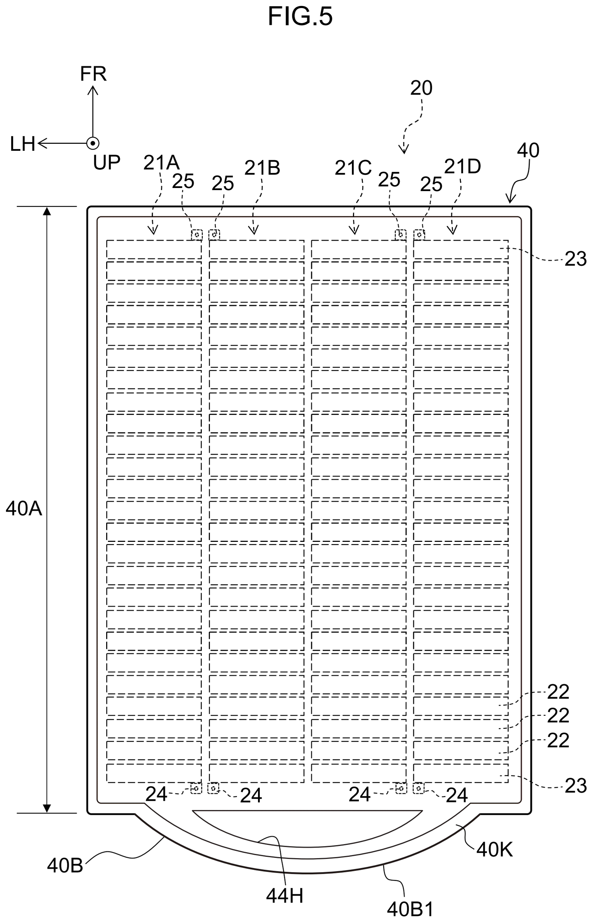

As illustrated in Fig. 5, the battery 20 is provided in a region extending in a front-rear direction (a rectangular region in plan view). As a result, as illustrated in Fig. 1, part of the battery 20 overlaps with at least part of seating faces 11A of the front seats 11 in plan view, and another part of the battery 20 overlaps with at least part of seating faces 12A of the rear seats 12 in plan view. Specifically, a front end of the battery 20 is positioned further forward than a front end of the seating faces 11A of the front seats 11. A rear end of the battery 20 is positioned further rearward than a front end of the seating faces 12A of the rear seats 12.

As illustrated in Fig. 5, the battery 20 includes plural battery modules 21A, 21B, 21C, 21D. The number of the battery modules 21 provided to the battery 20 is, for example, an even number, and is specifically four. Reference will simply be made to battery modules 21 when describing the plural battery modules 21A, 21B, 21C, 21D without particular discrimination therebetween.

The plural battery modules 21A, 21B, 21C, 21D are arranged alongside each other in the vehicle width direction.

The plural battery modules 21A, 21B, 21C, 21D are configured from a first battery module 21A, a second battery module 21B, a third battery module 21C, and a fourth battery module 21D.

Note that there is no part of the battery 20 where the battery modules 21 are alongside each other in the height direction.

Each of the plural battery modules 21A, 21B, 21C, 21D includes plural battery cells 22 arranged alongside each other in the vehicle front-rear direction. The battery cells 22 are each a square cell, and each have a similar configuration to each other.

The internal battery equipment 30 is a junction block 30. The internal battery equipment 30 corresponds to a "first equipment" of the present disclosure. The internal battery equipment 30 is sometimes called a first equipment 30.

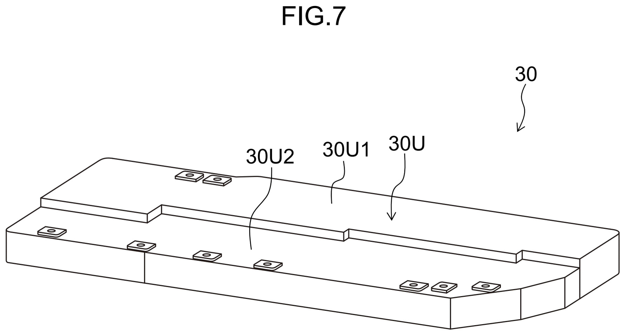

The internal battery equipment 30 includes a housing 31 (see Fig. 7), and electric components (non-illustrated) such as bus bars, relays, fuses and the like housed in the housing 31. The relays include a system main relay. Although omitted in the drawings, the housing 31 includes a lower housing and an upper housing, and is configured in an upper/lower divided structure.

The internal battery equipment 30 is arranged above the battery 20 and below the rear seats 12 such that, in plan view, at least part thereof overlaps with at least part of the battery 20, and overlaps with at least part of the seating faces 12A of the rear seats 12. Specifically, the internal battery equipment 30 is arranged above the battery 20 and below the rear seats 12 such that part thereof overlaps with part of the battery 20 in plan view, and the entirety thereof overlaps with part of the seating face 12A of the rear seats 12 in plan view.

As illustrated in Fig. 6, the plural information processing devices 60A, 60B include a first information processing device 60A and a second information processing device 60B.

The first information processing device 60A is a battery ECU serving as a "control device".

The first information processing device 60A, for example, controls relays provided in the internal battery equipment 30. The first information processing device 60A corresponds to a "second equipment" of the present disclosure. The first information processing device 60A is sometimes called a second equipment 60A.

The first information processing device 60A is arranged above the internal battery equipment 30 such that at least part thereof overlaps with at least part of the internal battery equipment 30 in plan view. Specifically, the first information processing device 60A is arranged above the internal battery equipment 30 such that the entirety thereof overlaps with part of the internal battery equipment 30 in plan view.

The second information processing device 60B receives voltage signals from plural voltage monitoring devices (omitted in the drawings), and transmits these to the first information processing device 60A after performing specific processing thereon. The voltage monitoring devices are devices to monitor the voltage of each portion of the battery 20, and configure a device also sometimes called a satellite battery module (SBM). Plural of the voltage monitoring devices are provided inside the battery case 40.

The second information processing device 60B is arranged above the internal battery equipment 30 such that at least part thereof overlaps with at least part of the internal battery equipment 30 in plan view.

The plural information processing devices 60 are arranged alongside each other in the vehicle width direction.

### External Battery Equipment 14

The vehicle 10 includes external battery equipment 14 that is arranged externally to the housing cases 40, 50, and is electrically connected to the battery pack 13.

The external battery equipment 14 is a device including a function as a so-called OnBoard Charger (OBC). In other words, the external battery equipment 14 includes a function to transform externally supplied alternating current power into direct current power usable by the battery 20 of the vehicle 10. This function is exhibited when utilizing a domestic power source to charge the battery pack 13 with an appropriate voltage and current. The external battery equipment 14 also includes a DC-DC converter function.

The external battery equipment 14 is arranged above the battery pack 13 and below the rear seats 12 such that at least part thereof overlaps with at least part of the internal battery equipment 30 in plan view, and at least part thereof overlaps with at least part of the seating face 12A of the rear seats 12 in plan view.

The external battery equipment 14 is arranged above the equipment case 50 such that at least part thereof overlaps with at least part of the equipment case 50 in plan view.

### External Equipment Cover 15

The vehicle 10 includes an external equipment cover 15. The external equipment cover 15 covers the external battery equipment 14 from above. The external equipment cover 15 is arranged below the rear seats 12 and supports the rear seats 12.

### Detailed Description

A more detailed description follows regarding features of each configuration element.

### Battery 20

As illustrated in Fig. 5, the battery modules 21 contained in the battery 20 each include a front terminal 25 and a rear terminal 24.

The front terminal 25 of the first battery module 21A and the front terminal 25 of the second battery module 21B are connected together through a non-illustrated bus bar.

The front terminal 25 of the third battery module 21C and the front terminal 25 of the fourth battery module 21D are connected together through a non-illustrated bus bar.

The rear terminals 24 of the battery modules 21 are electrically connected to the internal battery equipment 30 though upper/lower connection bus bars 70, described later.

The rear terminals 24 are positioned further rearward than a rear end member 23, from out of a front-rear pair of end members 23 provided to the battery modules 21. Note that the front-rear pair of end members 23 are members for restraining the plural battery cells 22 in a state clamped from both front and rear directions. The end members 23 are, for example, aluminum die-cast components.

### Battery Case 40

The battery case 40 is positioned so as to be entirely lower than a floor surface of a vehicle cabin.

As illustrated in Fig. 5, the battery case 40 includes a battery case main body 40A, and a battery case rearward extension 40B.

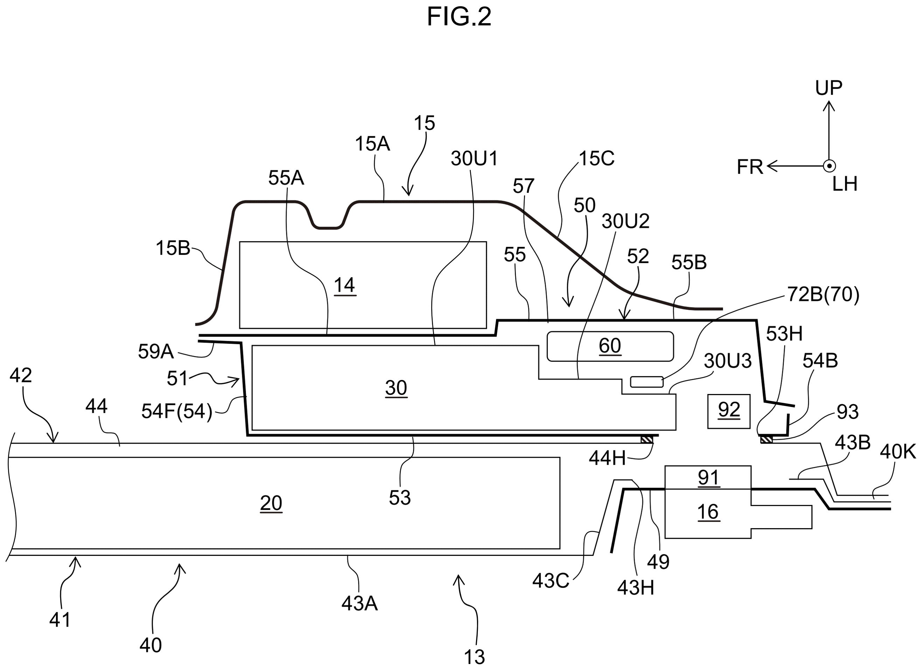

The battery case main body 40A is a part where the battery 20 is housed, and the battery case rearward extension 40B is a part where the battery 20 is not housed. The battery case rearward extension 40B is provided further rearward than the battery case main body 40A. The internal space of the battery case 40 is extended rearward due to the battery case rearward extension 40B being provided. As illustrated in Fig. 2, the space inside the battery case rearward extension 40B has a smaller height dimension than the space inside the battery case main body 40A.

The battery case rearward extension 40B has a shape in which a vehicle width dimension decreases on progression toward the rear side. This thereby enables the internal space of the battery case 40 to be extended while avoiding interference with configuration in the vicinity of the rear wheels of the vehicle 10.

The battery case 40 includes a battery case lower 41 and a battery case upper 42.

The battery case lower 41 includes a first lower wall 43A. The first lower wall 43A is provided to the battery case main body 40A. The first lower wall 43A has a shape extending in both the front-rear direction and the vehicle width direction, and is positioned directly below the battery 20.

The battery case lower 41 includes a second lower wall 43B. The second lower wall 43B is provided to the battery case rearward extension 40B. The second lower wall 43B is positioned further rearward than the first lower wall 43A. The second lower wall 43B is positioned further upward than the first lower wall 43A. The second lower wall 43B includes a connecter block hole 43H.

The battery case 40 includes a connecter block 49 attached to the battery case lower 41 so as to close up the connecter block hole 43H.

The battery case upper 42 has a shape extending in both the front-rear direction and vehicle width direction, and includes an upper wall 44 covering the battery 20 from above. The upper wall 44 functions as a floor panel configuring part of a floor of the vehicle cabin. This means that the vehicle 10 does not include another floor panel arranged above the upper wall 44.

The upper wall 44 includes an upper wall opening portion 44H piercing through the upper wall 44. The upper wall opening portion 44H is provided at a position corresponding to the battery case rearward extension 40B. At least part of the upper wall opening portion 44H overlaps with at least part of the connecter block hole 43H in plan view.

The part of the upper wall 44 where the upper wall opening portion 44H is provided is positioned at the same height in the height direction as the part of the upper wall 44 overlapping with the battery 20 in plan view.

### Equipment Case 50

In plan view, the entire equipment case 50 overlaps with a rear side portion of the battery case 40. The part of the battery case 40 that overlaps with the equipment case 50 in plan view includes a portion of the battery case main body 40A and a portion of the battery case rearward extension 40B. A flange 40K, which is formed around an entire periphery of an outer edge of the battery case 40, does not overlap with the equipment case 50 in plan view.

The equipment case 50 includes an equipment case lower 51 and an equipment case upper 52.

The equipment case lower 51 and the equipment case upper 52 are both die-cast components, specifically aluminum die-cast components.

The equipment case lower 51 includes a lower wall 53 and side walls 54.

The lower wall 53 includes a lower wall opening portion 53H that is a hole piercing through the lower wall 53. The lower wall opening portion 53H is provided such that at least part thereof overlaps with at least part of the upper wall opening portion 44H of the battery case upper 42 in plan view. Electrical connection between components inside the battery case 40, such as the battery 20 and the like, and components inside the equipment case 50, such as the internal battery equipment 30 and the like, is realized through the upper wall opening portion 44H of the battery case upper 42 and the lower wall opening portion 53H of the equipment case lower 51.

The equipment case upper 52 includes an upper wall 55. The upper wall 55 covers the internal battery equipment 30 from above.

The equipment case upper 52 includes an upper bulge portion 57 bulging upward. The internal space of the equipment case 50 is extended upward at a position directly below the upper bulge portion 57 due to forming the upper bulge portion 57. The upper bulge portion 57 is provided at a position on the rear side of the equipment case upper 52.

The upper wall 55 includes a first upper wall 55A and a second upper wall 55B.

At least part of the first upper wall 55A overlaps with at least part of the external battery equipment 14 in plan view and does not overlap with the one or more information processing devices 60 in plan view. Specifically, part of the first upper wall 55A overlaps with the entire external battery equipment 14 in plan view and does not overlap with the plural information processing devices 60 in plan view.

At least part of the second upper wall 55B overlaps with at least part of the one or more information processing devices 60 in plan view, and does not overlap with the external battery equipment 14 in plan view. Specifically, part of the second upper wall 55B overlaps with the entirety of the plural information processing devices 60 in plan view and does not overlap with the external battery equipment 14 in plan view.

The plate thickness direction of the first upper wall 55A is oriented in the height direction.

The second upper wall 55B is positioned further upward than the first upper wall 55A. The second upper wall 55B is provided to the upper bulge portion 57. The plate thickness direction of the second upper wall 55B is oriented in the height direction.

### Internal Battery Equipment 30

The internal battery equipment 30 includes the plural (four) battery connection sections 32A, 32B, 32C, 32D respectively connected to the plural upper/lower connection bus bars 70, described later. The internal battery equipment 30 is electrically connected to the battery 20 through the plural (four) upper/lower connection bus bars 70.

The plural battery connection sections 32A, 32B, 32C, 32D are provided to a rear section of the internal battery equipment 30 when the internal battery equipment 30 is treated as being split into an internal battery equipment 30 front section and an internal battery equipment 30 rear section. Specifically, the plural battery connection sections 32A, 32B, 32C, 32D are provided in the vicinity of a rear edge of the internal battery equipment 30.

The battery connection sections 32A, 32B, 32C, 32D are configured so as to enable upper bus bars 72 of the upper/lower connection bus bars 70 to be connected to the battery connection sections 32A, 32B, 32C, 32D from above.

The plural battery connection sections 32A, 32B, 32C, 32D are configured from a first battery connection section 32A, a second battery connection section 32B, a third battery connection section 32C, and a fourth battery connection section 32D.

The internal battery equipment 30 includes plural supply connection sections 34A, 34B, 34C. The plural supply connection sections 34A, 34B, 34C are electrically connected to cable connecters 16, described later, through bus bars or the like.

The plural supply connection sections 34A, 34B, 34C are provided to the internal battery equipment 30 rear section when the internal battery equipment 30 is treated as being split into an internal battery equipment 30 front section and an internal battery equipment 30 rear section. Specifically, the plural supply connection sections 34A, 34B, 34C are provided in the vicinity of the rear edge of the internal battery equipment 30.

The upper face 30U of the internal battery equipment 30 includes a first upper face 30U1 and a second upper face 30U2.

The second upper face 30U2 is provided further rearward than the first upper face 30U1. Specifically, the first upper face 30U1 is an upper face of a front section of the internal battery equipment 30, and the second upper face 30U2 is an upper face of a rear section of the internal battery equipment 30. The second upper face 30U2 is positioned lower than the first upper face 30U1. The internal battery equipment 30 is accordingly formed with a height of the rear section being lower than that of the front section.

The first upper face 30U1 does not overlap with the plural information processing devices 60 in plan view.

In plan view, at least part of the second upper face 30U2 overlaps with at least part of the plural information processing devices 60. Specifically, at least part of the second upper face 30U2 overlaps with at least part of the first information processing device 60A in plan view, and at least part of the second upper face 30U2 overlaps with at least part of the second information processing device 60B in plan view.

### Plural Information Processing Devices 60

The shape of each of the information processing devices 60 is a substantially cuboidal shape. The information processing devices 60 are each arranged with their thickness directions oriented in the height direction. The thickness direction means a direction of the shortest side in a cuboid. However, the information processing devices 60 may be arranged with their thickness directions oriented in directions slightly inclined with respect to the height direction.

Moreover, the information processing devices 60 are each arranged with their long side directions oriented in the vehicle width direction. Reference to the long side direction means a direction along the longer side of the two sides remaining in the three sides of a cuboid after the shortest side has been excluded.

### External Battery Equipment 14

The external battery equipment 14 is arranged above the equipment case 50 such that the entire external battery equipment 14 overlaps with part of the equipment case 50 in plan view.

Specifically, the external battery equipment 14 is arranged such that the entire external battery equipment 14 overlaps with a portion of the first upper wall 55A of the equipment case 50 in plan view. Namely, the external battery equipment 14 is arranged so as not to overlap with the upper bulge portion 57 of the equipment case upper 52 in plan view. The external battery equipment 14 is positioned forward of the upper bulge portion 57 in the front-rear direction.

The external battery equipment 14 is electrically connected to the battery pack 13 through a non-illustrated harness or the like. This electrical connection is performed through a charging opening portion 55H1 of the equipment case upper 52.

### Upper/Lower Connection Bus Bars 70

The battery pack 13 includes the upper/lower connection bus bars 70 for electrically connecting the battery 20 and the internal battery equipment 30 together.

Plural (four) of the upper/lower connection bus bars 70 are provided. This means that the same number of the upper/lower connection bus bars 70 are provided as the number of battery modules 21 provided in the battery 20.

Although not individually illustrated in the drawings, the plural upper/lower connection bus bars 70 are configured from a first upper/lower connection bus bar 70A, a second upper/lower connection bus bar 70B, a third upper/lower connection bus bar 70C, and a fourth upper/lower connection bus bar 70D.

The first upper/lower connection bus bar 70A electrically connects the rear terminal 24 of the first battery module 21A and the first battery connection section 32A of the internal battery equipment 30 together.

The second upper/lower connection bus bar 70B electrically connects the rear terminal 24 of the second battery module 21B and the second battery connection section 32B of the internal battery equipment 30 together.

The third upper/lower connection bus bar 70C electrically connects the rear terminal 24 of the third battery module 21C and the third battery connection section 32C of the internal battery equipment 30 together.

The fourth upper/lower connection bus bar 70D electrically connects the rear terminal 24 of the fourth battery module 21D and the fourth battery connection section 32D of the internal battery equipment 30 together.

They will simply be referred to as upper/lower connection bus bars 70 when describing common features below without particular discrimination therebetween.

The upper/lower connection bus bars 70 each include a lower bus bar 71 attached to the battery 20, and an upper bus bar 72 attached to the internal battery equipment 30.

The lower bus bar 71 includes a battery side connection section 73 connected to the battery 20, and a lower connecter section 74 connected to the upper bus bar 72.

The upper bus bar 72 includes an equipment side connection section 75 connected to the internal battery equipment 30, and an upper connecter section 76 connected to the lower connecter section 74.

Specifically, the battery side connection section 73 of the lower bus bar 71 is connected to the rear terminal 24 of the battery module 21. The equipment side connection section 75 of the upper bus bar 72 is connected to a battery connection section 32 of the internal battery equipment 30.

The upper connecter section 76 is connected to the lower connecter section 74 from above. Namely, the direction of connecting the lower connecter section 74 and the upper connecter section 76 together is the height direction.

The lower connecter section 74 and the upper connecter section 76 are arranged further rearward than the battery 20 and the internal battery equipment 30 so as not to overlap with the battery 20 and the internal battery equipment 30 in plan view.

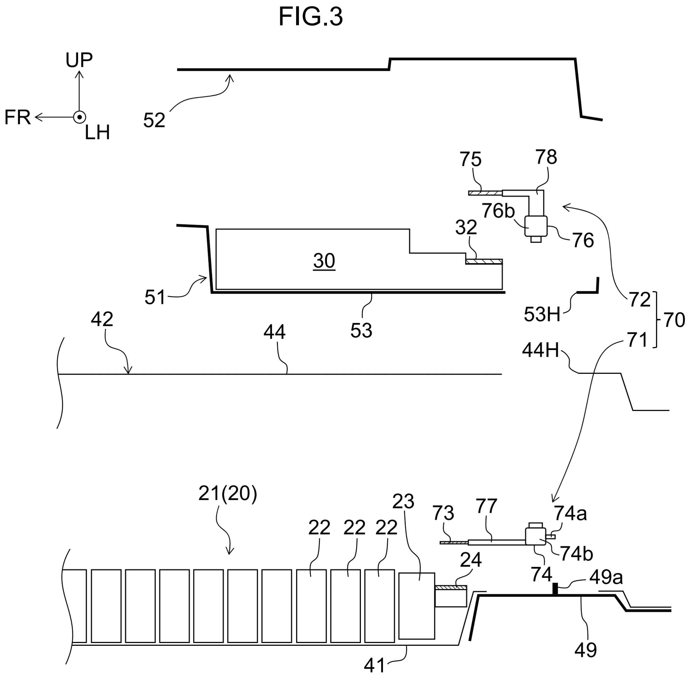

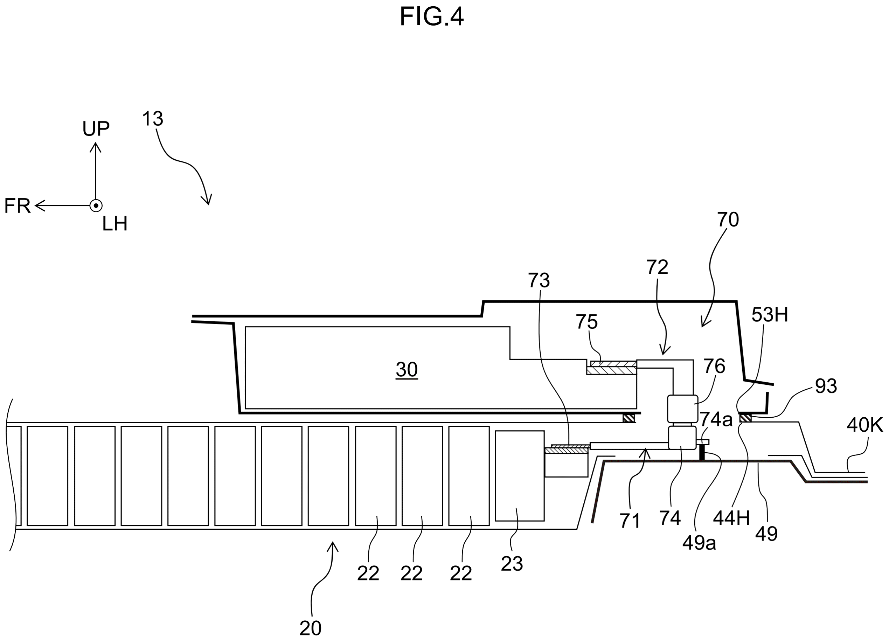

Note that the rear terminals 24 and the battery connection sections 32 that are electrically connected by the upper/lower connection bus bars 70 are positioned at different positions to each other in the vehicle width direction. Namely, the upper/lower connection bus bars 70 are configured so as to electrically connect together rear terminals 24 and battery connection sections 32 that are positioned at different positions to each other in the vehicle width direction. Fig. 3 and Fig. 4 are schematic diagrams, and the battery side connection sections 73 and the lower connecter sections 74 are positioned at different positions in the vehicle width direction, and the equipment side connection sections 75 and the upper connecter sections 76 are positioned at different positions in the vehicle width direction.

Each of the lower bus bars 71 and the upper bus bars 72 includes a bus bar main body formed from a conductive material such as copper, aluminum, or the like, and an insulating member covering the bus bar main body. Specifically, in the lower bus bar 71, the bus bar main body is not exposed at least at parts other than at the battery side connection section 73 and, in the upper bus bar 72, the bus bar main body is not exposed at least at parts other than at the equipment side connection section 75.

In other words, the lower bus bar 71 includes a lower bus bar cover 77 that has insulation properties and covers the bus bar main body. The lower connecter section 74 also includes a lower connecter housing 74b having insulation properties.

The upper bus bar 72 includes an upper bus bar cover 78 that has insulation properties and covers the bus bar main body. The upper connecter section 76 includes an upper connecter housing 76b having insulation properties.

Connecting the lower connecter section 74 and the upper connecter section 76 together means that there is no need to add an additional member, and achieves a configuration so as not to expose the bus bar main body (electrically active section).

The lower connecter section 74 includes a fixed portion 74a for fixing to the housing cases 40, 50. This thereby enables the lower connecter section 74 side of the lower bus bar 71 to be prevented from being a free end. The part of the housing cases 40, 50 for fixing the fixed portion 74a is on the battery case 40, and more specifically is the connecter block 49 of the battery case 40. The connecter block 49 includes a fixing portion 49a for fixing the fixed portion 74a. Note that the upper connecter section 76 is fixed due to being connected to the lower connecter section 74, and so does not include a fixed portion such as the fixed portion 74a.

A procedure to connect the upper/lower connection bus bars 70 is broadly as follows.
(1) Arrange the battery 20 in the battery case lower 41.
(2) Connect the lower bus bar 71 to the battery 20 and also fix the lower bus bar 71 to the connecter block 49.
(3) Close the battery case lower 41 using the battery case upper 42, and arrange the equipment case lower 51 housing the internal battery equipment 30 above the battery case 40.
(4) Connect the upper bus bar 72 to the internal battery equipment 30 and also connect the upper bus bar 72 to the lower bus bar 71.

### Cable Connecters 16

The vehicle 10 includes the cable connecters 16 that are connected to the battery pack 13 for supplying electrical power to each vehicle section.

The cable connecter 16 is attached, from below, to a part of the housing cases 40, 50 further rearward than the battery 20. Specifically, the cable connecter 16 is attached, from below, to a part of the battery case 40 corresponding to the connecter block 49.

The battery pack 13 includes an internal connecter 91 connected to the cable connecter 16. The internal connecter 91 is fixed to the connecter block 49. The cable connecter 16 is connected to the internal connecter 91 of the battery pack 13 from below. Note that the internal connecter 91 is electrically connected to the internal battery equipment 30 through a non-illustrated bus bar, a power distribution unit 92, described later, and the like.

### Power Distribution Unit 92

The battery pack 13 includes the power distribution unit 92 housed in the housing cases 40, 50.

The power distribution unit 92 is connected to the supply connection sections 34A, 34B, 34C of the internal battery equipment 30 through bus bars or the like, and is also connected to the plural internal connecters 91 through bus bars or the like. This means that the power distribution unit 92 functions so as to distribute power using the plural provided cable connecters 16.

The power distribution unit 92 is arranged further rearward than the battery 20 and the internal battery equipment 30, so as not to overlap with the battery 20 and the internal battery equipment 30 in plan view. The power distribution unit 92 is arranged further rearward than the internal battery equipment 30 such that at least part thereof overlaps with at least part of the internal battery equipment 30 when viewed face-on.

### Assembly to Vehicle Body Framework Task

The battery pack 13, the external battery equipment 14, and the external equipment cover 15 are integrated together as a single body prior to being assembled to the vehicle body framework. Then, in a state in which the battery pack 13, the external battery equipment 14, the external equipment cover 15, and the like have been integrated together as a single body, they are assembled, from below, to the vehicle body framework including a left-right pair of rockers (side sills).

### First Bus Bar 94B and Second Bus Bar 72B

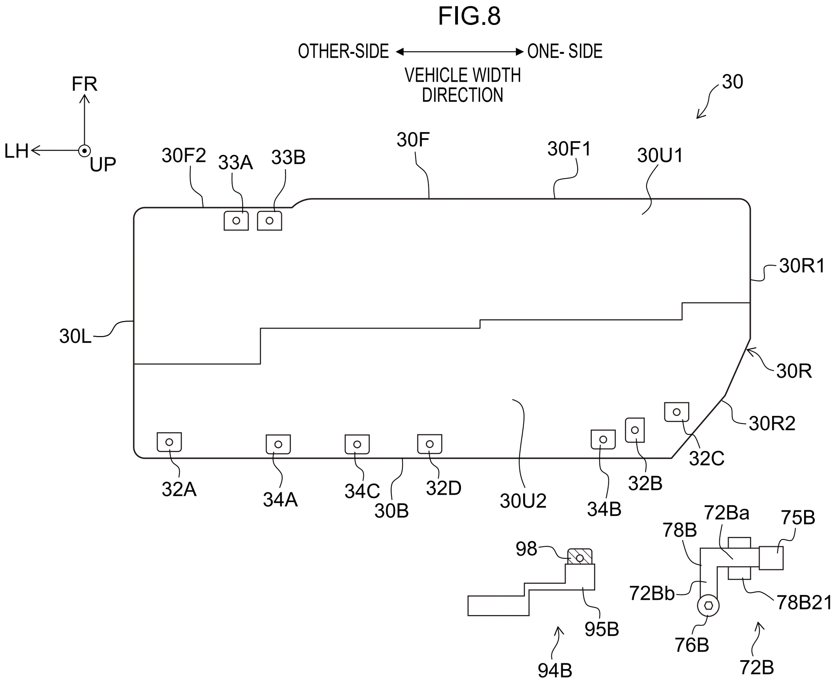

Fig. 8, Fig. 9, and Fig. 10 illustrate, together with a first equipment 30, a supply bus bar 94B connected to the supply connection section 34B, and an upper bus bar 72B of the second upper/lower connection bus bar 70B connected to the second battery connection section 32B. In the following the supply bus bar 94B is called a first bus bar 94B, the upper bus bar 72B of the second upper/lower connection bus bar 70B is called a second bus bar 72B, and a relationship between the supply bus bar 94B and the second upper/lower connection bus bar 70B will be described.

The first bus bar 94B and the second bus bar 72B are connected in the vicinity of an outer edge of the first equipment 30 in plan view. Specifically, connection sections 34B, 32B to be connected to the first bus bar 94B and the second bus bar 72B are provided in the vicinity of a rear outer edge of the first equipment 30 in plan view.

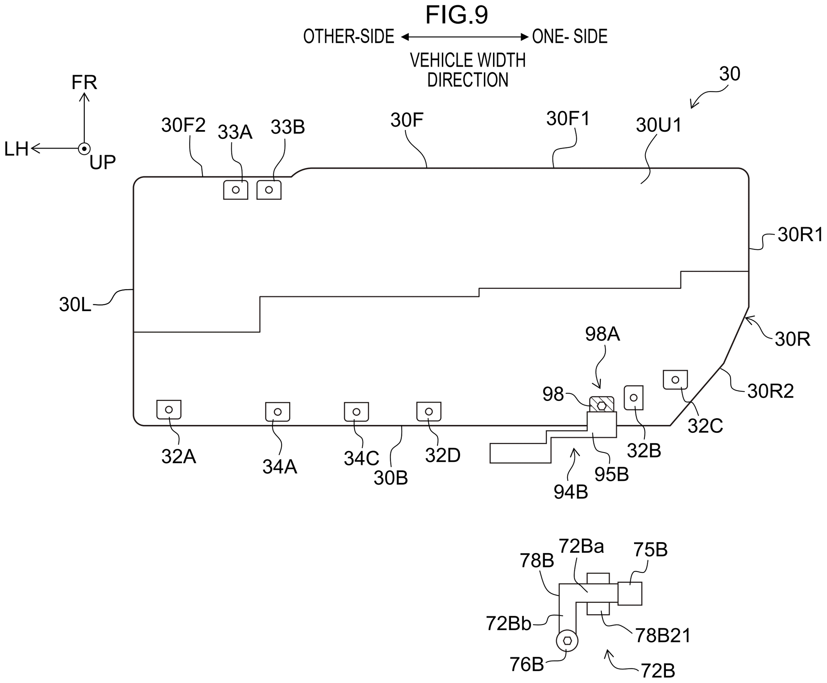

Fig. 9 illustrates a state in which the first bus bar 94B has been connected to the supply connection section 34B.

The part where the first equipment 30 and the first bus bar 94B are connected together configures an electrically active section 98A. The electrically active section 98A is in an exposed state. Specifically, the first bus bar 94B includes a first bus bar main body 98, and a first bus bar cover 95B. A part of the first bus bar main body 98 that is connected to the supply connection section 34B is exposed from the first bus bar cover 95B. The first bus bar 94B connects the first equipment 30 and the power distribution unit 92 together.

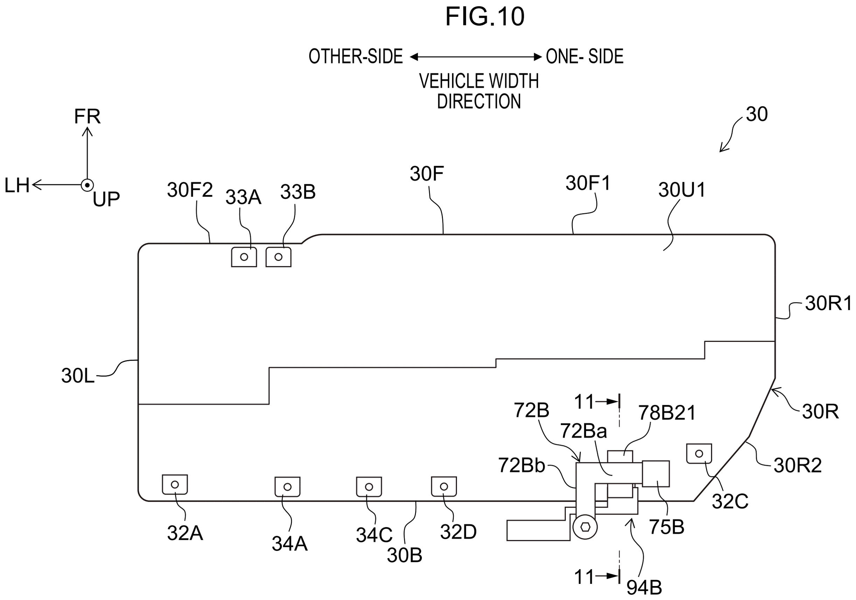

Fig. 10 illustrates a state in which the second bus bar 72B has been connected to the battery connection section 32B.

As illustrated in Fig. 10, a state in which the second bus bar 72B has been connected to the battery connection section 32B results in a state in which part of the second bus bar 72B (a cover portion 78B21) covers the electrically active section.

The second bus bar 72B includes a first extension portion 72Ba extending in a direction along an outer edge of the first equipment 30 in plan view, this being the vehicle width direction, and includes a second extension portion 72Bb extending in a direction intersecting with the outer edge of the first equipment 30 in plan view, this being the vehicle front-rear direction.

### Upper/Lower Connection Bus Bars 70

The first extension portion 72Ba overlaps with the first equipment 30 in plan view. The first extension portion 72Ba includes the cover portion 78B21. In other words, part of the first extension portion 72Ba functions as the cover portion 78B21.

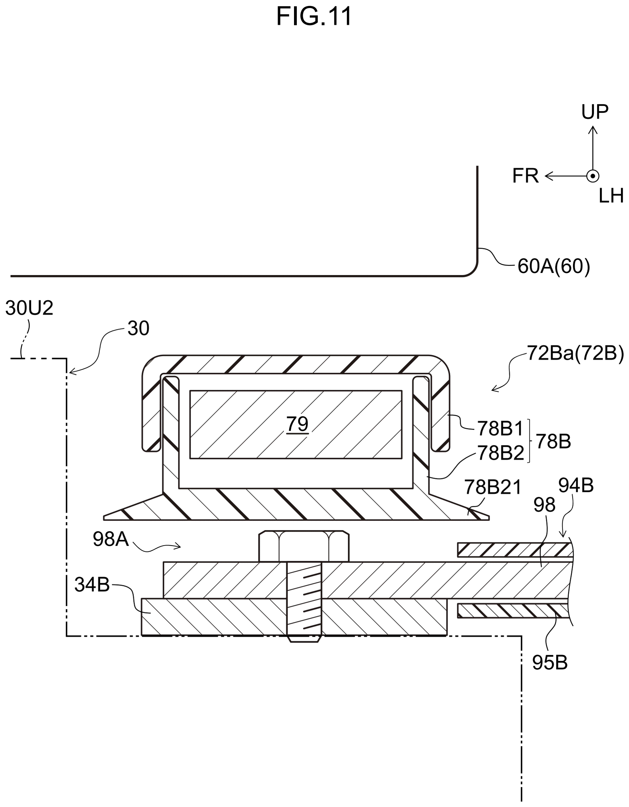

Specifically, as illustrated in Fig. 11, the second bus bar 72B includes a second bus bar cover 78B. The second bus bar cover 78B includes a one-side cover 78B1 covering a bus bar main body 79 of the second bus bar 72B from a plate thickness direction one-side, and an other-side cover 78B2 covering the bus bar main body 79 of the second bus bar 72B from a plate thickness direction other-side. The plate thickness direction of the bus bar main body 79 is the vehicle height direction at the first extension portion 72Ba of the second bus bar 72B. The plate thickness direction one-side is the vehicle upward direction, and the plate thickness direction other-side is the vehicle downward direction.

The one-side cover 78B1 is made from a synthetic resin, and includes a substantially U-shaped cross-section profile opening toward the plate thickness direction other-side of the bus bar main body 79.

The other-side cover 78B2 is made from a synthetic resin, and includes a substantially U-shaped cross-section profile opening toward the plate thickness direction one-side of the bus bar main body 79. The other-side cover 78B2 includes a wider-width portion 78B21 formed with a locally greater width dimension. The wider-width portion 78B21 functions as the cover portion 78B21. Namely, in a state in which the second bus bar 72B has been connected to the first equipment 30, the cover portion 78B21 of the second bus bar cover 78B of the second bus bar 72B covers the electrically active section 98A. Specifically, the second bus bar 72B is connected to the first equipment 30 from above, and the cover portion 78B21 covers the electrically active section 98A from above.

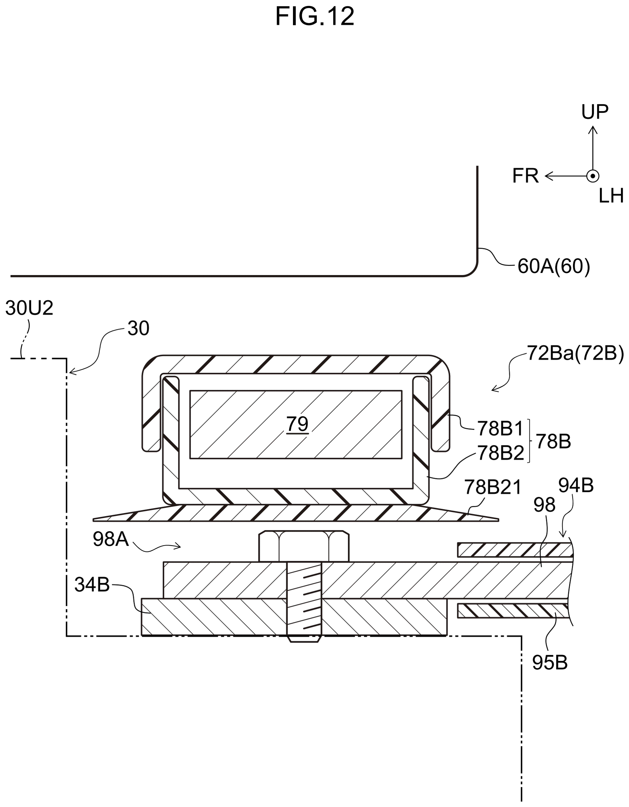

In the example illustrated in Fig. 11, the wider-width portion 78B21 is integrally formed to the other-side cover 78B2. However, as illustrated in Fig. 12, the wider-width portion 78B21 may be formed as a separate body to the one-side cover 78B1 and the other-side cover 78B2.

### Operation and Advantageous Effects

Next, description follows regarding the operation and advantageous effects of the present exemplary embodiment.

In the present exemplary embodiment, as illustrated in Fig. 8, Fig. 9, and Fig. 10, the onboard device 13 includes the first equipment 30, the first bus bar 94B connected to the first equipment 30, and the second bus bar 72B connected to the first equipment 30. As illustrated in Fig. 9, the part where the first equipment 30 and the first bus bar 94B are connected is the electrically active section 98A.

A state in which the electrically active section 98A remains exposed is not desirable. The provision of a cover or the like to cover the electrically active section 98A might accordingly be considered, however in such cases this would lead to a more bulky structure.

Thus in the present exemplary embodiment, as illustrated in Fig. 9, the second bus bar 72B includes the cover portion 78B21 having insulation properties, and as illustrated in Fig. 10, the cover portion 78B21 of the second bus bar 72B covers the electrically active section 98A in a state in which the second bus bar 72B has been connected to the first equipment 30.

This means that the electrically active section 98A can be covered by the second bus bar 72B, and a more compact structure can be realized than an embodiment in which a separate member is provided for covering the electrically active section 98A.

Moreover, in the present exemplary embodiment, as illustrated in Fig. 4, the second bus bar 72B configures at least part of wiring connecting the battery 20 and the first equipment 30 together, and the electrically active section 98A becomes in a non-conducting state in a state in which the second bus bar 72B is not connected to the first equipment 30.

This thereby enables safety to be improved.

Moreover, in the present exemplary embodiment, as illustrated in Fig. 11, the second bus bar 72B includes the second bus bar cover 78B. The bus bar cover 78B includes the wider-width portion 78B21 formed with the locally greater width dimension. The wider-width portion 78B21 functions as the cover portion 78B21.

This means that the electrically active section 98A can be appropriately covered even in cases in which the width dimension at general portions of the second bus bar cover 78B is insufficient to cover the electrically active section 98A.

Moreover, in the present exemplary embodiment, as illustrated in Fig. 11, the bus bar cover 78B includes the one-side cover 78B1 covering the bus bar main body 79 of the second bus bar 72B from the plate thickness direction one-side, and the other-side cover 78B2 covering the bus bar main body 79 of the second bus bar 72B from the plate thickness direction other-side.

As illustrated in Fig. 11, the wider-width portion 78B21 is integrally formed to one or other out of the one-side cover 78B1 or the other-side cover 78B2.

An increase in the number of components can be suppressed in such cases.

Note that, instead of the above exemplary embodiment, as illustrated in Fig. 12, the wider-width portion 78B21 may be formed as a separate body to the one-side cover 78B1 and the other-side cover 78B2.

Such cases facilitate design changes to the width dimension of the wider-width portion 78B21.

Moreover, in the present exemplary embodiment, as illustrated in Fig. 10, the second bus bar 72B is connected to the first equipment 30 from above, and the cover portion 78B21 covers the electrically active section 98A from above.

This thereby facilitates a task of connecting the second bus bar 72B to the second equipment 60A.

Moreover, in the present exemplary embodiment, as illustrated in Fig. 10, the second bus bar 72B is connected in the vicinity of the outer edge of the first equipment 30 in plan view. The second bus bar 72B includes the first extension portion 72Ba that extends in a direction along the outer edge of the first equipment 30 in plan view. The first extension portion 72Ba overlaps with the first equipment 30 in plan view.

This accordingly enables efficient utilization of a space overlapping with the first equipment 30 in plan view.

In the present exemplary embodiment the cover portion 78B21 is provided to the first extension portion 72Ba.

This means that the first extension portion 72Ba overlapping with the first equipment 30 in plan view can be utilized efficiently to enable realization of protection of the electrically active section 98A.

Moreover, in the present exemplary embodiment, as illustrated in Fig. 11, the onboard device 13 includes the second equipment 60A. The second equipment 60A is arranged above the cover portion 78B21 such that at least part thereof overlaps with the electrically active section 98A and the cover portion 78B21 in plan view.

This means that a space directly above the electrically active section 98A and the cover portion 78B21 can be utilized for placement of the second equipment 60A in an easy-to-implement compact structure, resulting in an efficient arrangement overall (see Fig. 2).

Preferable exemplary embodiments of the present disclosure have been described above, however the present disclosure is not limited to the above description.

### Explanation of Reference Numerals

- 13: battery pack (onboard device)
- 20: battery
- 30: junction block (internal battery equipment, first equipment)
- 60A: first information processing device (second equipment)
- 70B: second upper/lower connection bus bar
- 72B: upper bus bar (second bus bar)
- 72Ba: first extension portion
- 72Bb: second extension portion
- 78B: upper bus bar cover (second bus bar cover, bus bar cover)
- 78B1: one-side cover
- 78B2: other-side cover
- 78B21: wider-width portion (cover portion)
- 79: bus bar main body
- 94B: supply bus bar (first bus bar)
- 95B: first bus bar cover
- 98: first bus bar main body
- 98A: electrically active section

## Claims

1. An onboard device comprising:
a first equipment;
a first bus bar connected to the first equipment; and
a second bus bar connected to the first equipment, wherein
a part where the first equipment and the first bus bar have been connected configures an electrically active section,
the second bus bar includes a cover portion having insulation properties, and
the cover portion of the second bus bar covers the electrically active section in a state in which the second bus bar has been connected to the first equipment.

2. The onboard device of claim 1, wherein:
the second bus bar configures at least part of wiring connecting a battery and the first equipment together; and
the electrically active section is in a non-conducting state in a state in which the second bus bar is not connected to the first equipment.

3. The onboard device of claim 1, wherein:
the second bus bar includes a bus bar cover;
the bus bar cover includes a wider-width portion formed with a locally greater width dimension; and
the wider-width portion functions as the cover portion.

4. The onboard device of claim 3, wherein:
the bus bar cover includes
a one-side cover covering a bus bar main body of the second bus bar from a plate thickness direction one-side, and
an other-side cover covering the bus bar main body of the second bus bar from a plate thickness direction other-side; and
the wider-width portion is formed as a separate body to the one-side cover and the other-side cover.

5. The onboard device of claim 3, wherein:
the bus bar cover includes
a one-side cover covering a bus bar main body of the second bus bar from a plate thickness direction one-side, and
an other-side cover covering the bus bar main body of the second bus bar from a plate thickness direction other-side; and
the wider-width portion is formed integrated to the one-side cover or the other-side cover.

6. The onboard device of claim 1, wherein:
the second bus bar is connected to the first equipment from above; and
the cover portion covers the electrically active section from above.

7. The onboard device of claim 6, wherein:
the second bus bar is connected in a vicinity of an outer edge of the first equipment in plan view;
the second bus bar includes a first extension portion extending in a direction along the outer edge of the first equipment in plan view; and
the cover portion is provided to the first extension portion.

8. The onboard device of claim 6, wherein:
the onboard device includes a second equipment; and
the second equipment is arranged further upward than the cover portion such that at least part of the second equipment overlaps with the electrically active section and the cover portion in plan view.
